# EUROPÄISCHE PATENTSCHRIFT

(11) **EP 0 981 686 B1**
(45) Veröffentlichungstag und Bekanntmachung des Hinweises auf die Patenterteilung: **14.05.2003**
(21) Anmeldenummer: 98933449.5
(22) Anmeldetag: 06.05.1998
(51) Int. Cl.: F02D 41/34

(54) **SYSTEM ZUM BETREIBEN EINER DIREKTEINSPRITZENDEN BRENNKRAFTMASCHINE, INSBESONDERE EINES KRAFTFAHRZEUGS**
ACTUATING SYSTEM FOR A DIRECT INJECTION INTERNAL COMBUSTION ENGINE, ESPECIALLY IN A VEHICLE
SYSTEME D'ACTIONNEMENT D'UN MOTEUR A COMBUSTION INTERNE ET A INJECTION DIRECTE, NOTAMMENT DANS UN VEHICULE

(30) Priorität: 10.05.1997 DE 19719760
(43) Veröffentlichungstag der Anmeldung: 01.03.2000
(73) Patentinhaber: ROBERT BOSCH GMBH, 70442 Stuttgart (DE)
(72) Erfinder: ODER, Michael, D-70825 Korntal-Münchingen (DE)
(86) Internationale Anmeldenummer: DE9801245
(87) Internationale Veröffentlichungsnummer: WO98051920

(56) Entgegenhaltungen:
- DE-A- 19 640 403
- GB-A- 2 233 388
- GB-A- 2 301 459
- US-A- 5 222 481
- PATENT ABSTRACTS OF JAPAN vol. 096, no. 012, 26. Dezember 1996 & JP 08 200116 A (TOYOTA MOTOR CORP), 6. August 1996
- PATENT ABSTRACTS OF JAPAN vol. 009, no. 155 (M-392), 29. Juni 1985 & JP 60 030437 A (MAZDA KK), 16. Februar 1985

## Beschreibung

### Stand der Technik,

Die Erfindung betrifft ein Verfahren zum Betreiben einer Brennkraftmaschine insbesondere eines Kraftfahrzeugs, bei dem Kraftstoff entweder in einer ersten Betriebsart während einer Verdichtungsphase oder in einer zweiten Betriebsart während einer Ansaugphase direkt in einen Brennraum eingespritzt wird, und bei dem die in den Brennraum eingespritzte Kraftstoffmenge in den beiden Betriebsarten unterschiedlich gesteuert und/oder geregelt wird. Des weiteren betrifft die Erfindung eine Brennkraftmaschine insbesondere für ein Kraftfahrzeug, mit einem Einspritzventil, mit dem Kraftstoff entweder in einer ersten Betriebsart während einer Verdichtungsphase oder in einer zweiten Betriebsart während einer Ansaugphase direkt in einen Brennraum einspritzbar ist, und mit einem Steuergerät zur unterschiedlichen Steuerung und/oder Regelung der in den Brennraum eingespritzten Kraftstoffmenge in den beiden Betriebsarten.

Derartige Systeme zur direkten Einspritzung von Kraftstoff in den Brennraum einer Brennkraftmaschine sind bspw. aus der GB-A-2 301 459 bekannt. Es wird dabei als erste Betriebsart ein sogenannter Schichtbetrieb und als zweite Betriebsart ein sogenannter Homogenbetrieb unterschieden. Der Schichtbetrieb wird insbesondere bei kleineren Lasten verwendet, während der Homogenbetrieb bei größeren, an der Brennkraftmaschine anliegenden Lasten zur Anwendung kommt. Im Schichtbetrieb wird der Kraftstoff während der Verdichtungsphase der Brennkraftmaschine in den Brennraum, und zwar dort in die unmittelbare Umgebung einer Zündkerze eingespritzt. Dies hat zur Folge, dass keine gleichmäßige Verteilung des Kraftstoffs in dem Brennraum mehr erfolgen kann, sondern dass der Kraftstoff sofort von der Zündkerze entzündet wird. Der Vorteil des Schichtbetriebs liegt darin, dass dort mit einer sehr geringen Kraftstoffmenge die anliegenden kleineren Lasten von der Brennkraftmaschine ausgeführt werden können. Größere Lasten können allerdings nicht durch den Schichtbetrieb erfüllt werden. Im für derartige größere Lasten vorgesehenen Homogenbetrieb wird der Kraftstoff während der Ansaugphase der Brennkraftmaschine eingespritzt, so dass eine Verwirbelung und damit eine Verteilung des Kraftstoffs in dem Brennraum noch ohne weiteres erfolgen kann. Insoweit entspricht der Homogenbetrieb etwa der Betriebsweise von Brennkraftmaschinen, bei denen in herkömmlicher Weise Kraftstoff in das Ansaugrohr eingespritzt wird.

In beiden Betriebsarten, also im Schichtbetrieb und im Homogenbetrieb, wird die einzuspritzende Kraftstoffmenge in Abhängigkeit von einer Mehrzahl von Eingangsgrößen auf einen im Hinblick auf Kraftstoffeinsparung, Abgasreduzierung und dergleichen optimalen Wert gesteuert und/oder geregelt. Die Steuerung und/oder Regelung ist dabei in den beiden Betriebsarten unterschiedlich.

Aufgabe der Erfindung ist es, eine direkteinspritzende Brennkraftmaschine zu schaffen, mit der eine weitere Verringerung des Kraftstoffverbrauchs möglich ist.

Diese Aufgabe wird bei einem Verfahren der eingangs genannten Art bzw. bei einer Brennkraftmaschine der eingangs genannten Art erfindungsgemäß dadurch gelöst, dass die erste Betriebsart als Normal-Betriebsart und die zweite Betriebsart als Ausnahme-Betriebsart ausgeführt wird, dass die Ausnahme-Betriebsart auf Grund des Betriebszustands der Brennkraftmaschine angefordert wird, dass die Normal-Betriebsart immer dann ausgeführt wird, wenn keine Anforderung der Ausnahme-Betriebsart vorliegt, und dass die Ausnahme-Betriebsart erst dann ausgeführt, wenn seit der letzten Ausführung der Ausnahme-Betriebsart eine vorgegebene Zeitdauer vergangen ist.

Die erste und die zweite Betriebsart, also der Schichtbetrieb und der Homogenbetrieb, sind somit nicht gleichwertig bzw. gleichberechtigt. Erfindungsgemäß ist der Schichtbetrieb als die normale Betriebsart der Brennkraftmaschine vorgesehen, während der Homogenbetrieb nur in Ausnahmefällen als Betriebsart der Brennkraftmaschine vorgesehen ist. Durch diese Wertung bzw. Gewichtung der beiden Betriebsarten wird erreicht, dass immer der Schichtbetrieb bevorrechtigt ist. Dies bedeutet gleichzeitig, dass immer diejenige Betriebsart, nämlich der Schichtbetrieb bevorzugt wird, mit dem eine weitere Kraftstoffeinsparung erreicht werden kann. Das erfindungsgemäße System ist also derart ausgelegt, dass der den Kraftstoffverbrauch erhöhende Homogenbetrieb als Ausnahme gehandhabt wird, während der den Kraftstoffverbrauch verringernde Schichtbetrieb als normale Betriebsart vorgesehen ist. Auf diese Weise wird eine weitere Kraftstoffeinsparung bei der erfindungsgemäßen Brennkraftmaschine erreicht.

Bei der Erfindung wird die Ausnahme-Betriebsart angefordert. Zu diesem Zweck ist es besonders vorteilhaft, wenn in dem Steuergerät ein Signal vorhanden ist, das eine Anforderung der Ausnahme-Betriebsart darstellt. Eine derartige Anforderung kann beispielsweise indirekt durch den Fahrer erfolgen, der das Fahrpedal niederdrückt, um damit beispielsweise das Kraftfahrzeug zu beschleunigen. Dies stellt gleichzeitig eine Vergrößerung der an der Brennkraftmaschine anliegenden Last dar, die von der Brennkraftmaschine nicht mehr im Schichtbetrieb, sondern nur noch im Homogenbetrieb ausgeführt werden kann. Befindet sich die Brennkraftmaschine jedoch in ihrer Normal-Betriebsart, also im Schichtbetrieb, so muß eine Umschaltung vom Schichtbetrieb in den Homogenbetrieb erfolgen. Diese Umschaltung wird durch die Anforderung des Homogenbetriebs, also der Ausnahme-Betriebsart eingeleitet. Dies hat zur Folge, dass die Brennkraftmaschine nur auf eine spezielle Anforderung hin in den den Kraftstoffverbrauch erhöhenden Homogenbetrieb umschaltet. Im Normalzustand hingegen wird die Brennkraftmaschine immer im kraftstoffsparenden Schichtbetrieb betrieben.

Erfindungsgemäß werden die beiden Betriebsarten gewichtet bzw. bewertet. Für die Normal-Betriebsart gibt es keine Anforderung oder dergleichen, sondern es wird immer dann in die Normal-Betriebsart umgeschaltet bzw. diese ausgeführt, wenn keine Anforderung der Ausnahme-Betriebsart vorliegt. Die Brennkraftmaschine wird dadurch im Normalfall immer in dem kraftstoffsparenden Schichtbetrieb betrieben und nur in Ausnahmefällen auf Anforderung im Homogenbetrieb. Auf diese Weise wird der Kraftstoffverbrauch, wie bereits erwähnt, weiter optimiert.

Besonders zweckmäßig ist es, wenn in dem Steuergerät ein Signal vorhanden ist, das den Zustand der Normal-Betriebsart kennzeichnet. Dies bedeutet, dass das Signal angibt, ob sich die Brennkraftmaschine in der Normal-Betriebsart, also im Schichtbetrieb befindet oder nicht. Auch dadurch wird insbesondere in dem Steuergerät die Wertung bzw. Gewichtung der beiden Betriebsarten zum Ausdruck gebracht. Bei einer vorteilhaften Ausgestaltung der Erfindung wird eine Ausführung der Ausnahme-Betriebsart erst dann beendet, wenn seit der letzten Ausführung der Normal-Betriebsart eine vorgegebene Zeitdauer vergangen ist.

Diese Ausgestaltung stellt eine weitere zeitliche Entprellung dar. Hierdurch kann erreicht werden, dass nach einem Umschalten in eine der beiden Betriebsarten nicht sofort wieder in die bisherige Ausgangs-Betriebsart zurückgeschaltet wird. Ein schnelles Hin- und Herschalten zwischen dem Schichtbetrieb und dem Homogenbetrieb wird also vermieden. Zumindest für die jeweils vorgegebene Zeitdauer wird diejenige Betriebsart aufrechterhalten, in die gerade umgeschaltet worden ist. Erst nach Ablauf dieser Zeitdauer kann dann wieder in die Ausgangs-Betriebsart zurückgeschaltet werden. Dies stellt eine weitere Verbesserung der erfindungsgemäßen Brennkraftmaschine im Hinblick auf die Vermeidung von Drehzahlschwankungen und damit im Hinblick auf den Fahrkomfort für die Insassen des Kraftfahrzeugs dar.

Bei einer vorteilhaften Ausgestaltung der Erfindung wird die Ausnahme-Betriebsart erst dann ausgeführt, wenn die Brennkraftmaschine bestimmte Betriebsbedingungen erfüllt. Auf diese Weise wird erreicht, dass der Übergang von dem Schichtbetrieb in den Homogenbetrieb ohne unerwünschte Drehzahländerungen der Brennkraftmaschine, insbesondere ohne ein sogenanntes Ruckeln vonstatten geht. Mit Hilfe der Berücksichtigung der genannten Betriebsbedingungen kann somit erreicht werden, dass die Insassen des Kraftfahrzeugs diesen Übergang möglichst gar nicht zur Kenntnis nehmen.

Bei einer vorteilhaften Weiterbildung der Erfindung wird die Ausnahme-Betriebsart erst dann ausgeführt, wenn eine vorgegebene Luftmenge in dem Brennraum unterschritten ist. Dies stellt eine Maßnahme dar, mit der beim Übergang vom Schichtbetrieb in den Homogenbetrieb der Brennkraftmaschine ein Ruckeln sicher vermieden wird.

Besonders zweckmäßig ist es, wenn in dem Steuergerät mindestens ein Signal vorhanden ist, das eine zeitabhängige Freigabe für eine Umschaltung in die Ausnahme-Betriebsart und wieder zurück darstellt. Dadurch kann auf besonders einfache Weise ein schnelles Umschalten zwischen der ersten und der zweiten Betriebsart vermieden werden. Durch eine Berücksichtigung des Fahrerwunsches, insbesondere einer Homogenanforderung durch den Fahrer, kann dabei jedoch sichergestellt werden, dass das vom Fahrer angeforderte Drehmoment trotzdem in jedem Fall sofort geliefert wird.

Bei einer vorteilhaften Ausgestaltung der Erfindung ist in dem Steuergerät mindestens ein Signal vorhanden, das eine von anderen Funktionen beispielsweise von der Tankentlüftung und/oder der Abgasrückführung abhängige Umschaltung in die Ausnahme-Betriebsart und/oder wieder zurück darstellt. Dies stellt eine funktionale Entprellung dar, durch die ein Ruck beim Umschalten in eine der beiden Betriebsarten vermieden wird.
- Figur 1: zeigt ein schematisches Blockschaltbild eines Ausführungsbeispiels eines erfindungsgemäßen Systems zum Betreiben einer Brennkraftmaschine eines Kraftfahrzeugs, und
- Figur 2: zeigt ein schematisches Diagramm zweier in dem Blockschaltbild der Figur 1 enthaltener Signale.

Bei einer direkteinspritzenden Brennkraftmaschine für ein Kraftfahrzeug sind beispielsweise vier Brennräume mit jeweils einem darin hin- und herbewegbaren Kolben vorgesehen, wobei jeder Brennraum des weiteren mit einem Einspritzventil versehen ist. Das Einspritzventil ist jeweils derart angeordnet, dass Kraftstoff direkt in den zugehörigen Brennraum eingespritzt werden kann. Des weiteren ist jeder der Brennräume mit einer Zündkerze versehen, mit der der Kraftstoff in dem jeweiligen Brennraum entzündet werden kann.

In einer ersten Betriebsart, dem Schichtbetrieb der Brennkraftmaschine, wird der Kraftstoff von dem Einspritzventil während einer durch den Kolben hervorgerufenen Verdichtungsphase in den Brennraum eingespritzt, und zwar örtlich in die unmittelbare Umgebung der Zündkerze sowie zeitlich unmittelbar vor dem oberen Totpunkt des Kolbens. Dann wird mit Hilfe der Zündkerze der Kraftstoff entzündet, so dass der Kolben in der nunmehr folgenden Arbeitsphase durch die Ausdehnung des entzündeten Kraftstoffs angetrieben wird.

In einer zweiten Betriebsart, dem Homogenbetrieb der Brennkraftmaschine, wird der Kraftstoff von dem Einspritzventil während einer durch den Kolben hervorgerufenen Ansaugphase in den Brennraum eingespritzt. Durch die gleichzeitig angesaugte Luft wird der eingespritzte Kraftstoff verwirbelt und damit in dem Brennraum im wesentlichen gleichmäßig verteilt. Danach wird das Kraftstoff-Luft-Gemisch während der Verdichtungsphase verdichtet, um dann von der Zündkerze entzündet zu werden. Durch die Ausdehnung des entzündeten Kraftstoffs wird wiederum der Kolben angetrieben.

Die im Schichtbetrieb und im Homogenbetrieb von den Einspritzventilen in die Brennräume jeweils eingespritzte Kraftstoffmenge wird von einem Steuergerät insbesondere im Hinblick auf einen geringen Kraftstoffverbrauch und/oder eine geringe Abgasentwicklung gesteuert und/oder geregelt. Zu diesem Zweck ist das Steuergerät mit einem Mikroprozessor versehen, der in einem Speichermedium, insbesondere in einem Read-Only-Memory ein Programm abgespeichert hat, das dazu geeignet ist, die genannte Steuerung und/oder Regelung durchzuführen. Das Steuergerät ist von Eingangssignalen beaufschlagt, die mittels Sensoren gemessene Betriebszustände der Brennkraftmaschine darstellen, und es erzeugt Ausgangssignale, mit denen über Aktoren das Verhalten der Brennkraftmaschine entsprechend der erwünschten Steuerung und/oder Regelung beeinflußt werden kann.

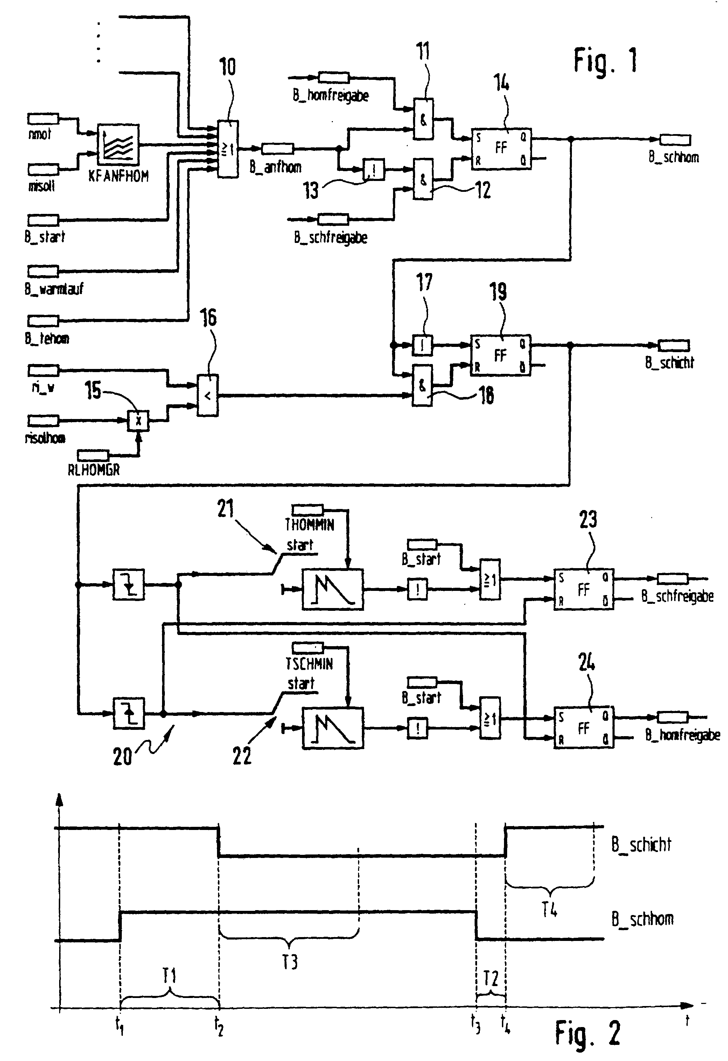

In der Figur 1 ist das Verfahren dargestellt, mit dem der Schichtbetrieb und der Homogenbetrieb von dem Steuergerät gesteuert wird. Insbesondere ist in der Figur 1 der Ablauf dargestellt, wie das Steuergerät zwischen dem Schichtbetrieb und dem Homogenbetrieb hin- und herschaltet.

Für das Steuergerät stellt der Schichtbetrieb die Normal-Betriebsart der Brennkraftmaschine dar. Dies äußert sich darin, dass ein Signal B_schicht vorhanden ist, das ein Bit breit ist, und das entweder mit B_schicht = 1 anzeigt, dass sich die Brennkraftmaschine in dieser Normal-Betriebsart, also im Schichtbetrieb befindet, oder das mit B_schicht = 0 anzeigt, dass die Brennkraftmaschine keinen Schichtbetrieb ausführt.

Der Homogenbetrieb stellt für das Steuergerät die Ausnahme-Betriebsart der Brennkraftmaschine dar. Zur Anforderung dieser Ausnahme-Betriebsart ist ein Signal B_schhom in dem Steuergerät vorgesehen, das ebenfalls ein Bit breit ist. Ist B_schhom = 1, so bedeutet dies, dass die Brennkraftmaschine in den Homogenbetrieb wechseln soll, dass also die Ausnahme-Betriebsart angefordert ist. Ist hingegen B_schhom = 0, so bedeutet dies, dass keine Anforderung für den Homogenbetrieb vorliegt, und dass deshalb die Brennkraftmaschine in ihrer Normal-Betriebsart betrieben werden soll.

Das Steuergerät steuert also die beiden Betriebsarten der Brennkraftmaschine immer ausgehend von der Normal-Betriebsart, dem Schichtbetrieb. Dies bedeutet, dass die Brennkraftmaschine nur dann in den Homogenbetrieb umgeschaltet wird, wenn eine entsprechende Anforderung vorliegt, ansonsten aber immer im Schichtbetrieb betrieben wird.

Eine Anforderung für den Homogenbetrieb kann sich aus einer Mehrzahl von Gründen ergeben. So ist es möglich, dass aufgrund einer Betätigung des Fahrpedals durch den Fahrer ein erwünschtes Sollmoment misoll von dem Steuergerät ermittelt wird, das von der Brennkraftmaschine geliefert werden soll. In Abhängigkeit von der Drehzahl nmot und dem genannten Sollmoment misoll kann sich über ein Kennfeld KFANFHOM eine Anforderung für den Homogenbetrieb ergeben, wenn der bisher ausgeführte Schichtbetrieb nicht dazu geeignet ist, das geforderte Sollmoment zu erzeugen. Weitere Möglichkeiten für die Anforderung des Homogenbetriebs können sich beim Start der Brennkraftmaschine oder während der Warmlaufphase der Brennkraftmaschine oder aufgrund einer Tankentlüftung in die Brennräume der Brennkraftmaschine ergeben. Diese Möglichkeiten sind in dem Steuergerät als Signale B_start und B_warmlauf und B_tehom vorhanden. Jede dieser Möglichkeiten sowie gegebenenfalls auch noch weitere derartige Möglichkeiten erzeugen über ein Oder-Gatter 10 jeweils ein ein Bit breites Signal B_anfhom, wobei B_anfhom = 1 ist, wenn eine Anforderung für den Homogenbetrieb vorliegt.

Danach erfolgt eine Verknüpfung von B_anfhom mit zwei Freigabesignalen B_homfreigabe und B_schfreigabe. Diese Signale sind jeweils ein Bit breit und dienen der Freigabe für den Homogenbetrieb bzw. der Freigabe für den Schichtbetrieb. Nur wenn B_homfreigabe = 1 ist, kann der angeforderte Homogenbetrieb tatsächlich ausgeführt werden. Ist dies nicht der Fall, muß so lange gewartet werden, bis B_homfreigabe = 1 wird. Dabei kann beispielsweise durch ein Signal, das über ein Oder-Gatter einkoppelbar ist, sichergestellt werden, dass ein vom Fahrer gefordertes Drehmoment jederzeit und schnell erzeugt werden kann.

Entsprechendes gilt für B_schfreigabe im Hinblick auf die Ausführung des Schichtbetriebs, wenn keine Anforderung für den Homogenbetrieb mehr vorliegt, also wenn B_anfhom = 0 geworden ist.

Die beiden Freigabesignale haben den Zweck, ein schnelles Hin- und Herschalten zwischen dem Homogenbetrieb und dem Schichtbetrieb zu verhindern. Wie noch erläutert werden wird, werden die beiden Freigabesignale mit Hilfe von Zeitverzögerungen aus dem Signal B_schicht gewonnen. Sie bewirken, dass nach jedem Wechsel der Betriebsart und damit nach jedem Wechsel von B_schicht erst nach einer vorgebaren Zeitdauer wieder eine Freigabe für den nächsten Wechsel der Betriebsart erfolgt.

Entsprechend Figur 1 erfolgt die Verknüpfung von B_anfhom mit B_homfreigabe und B_schfreigabe mittels zweier Und-Glieder 11, 12, eines Inverters 13 und eines Flip-Flpos 14. Das Ausgangssignal dieser Anordnung ist dann das Signal B_schhom.

Danach wird B_schhom mit einem Signal verknüpft, das bestimmte Betriebsbedingungen der Brennkraftmaschine kennzeichnet. Bei diesen Betriebsbedingungen handelt es sich um die Luftfüllung bzw. die Luftmenge in den Brennräumen und gegebenenfalls in den Ansaugbereichen der Brennkraftmaschine. Diese Luftfüllung muß einen vorgebaren Wert unterschreiten. Erst dann darf in den Homogenbetrieb umgeschaltet werden. Würde früher umgeschaltet werden, würde ein zu großes Überschußmoment entstehen, das durch das Steuergerät nicht mehr ausgeregelt werden könnte, und das deshalb zu unerwünschten Drehzahlschwankungen führen würde.

In der Figur 1 wird dies dadurch erreicht, dass ein Siganl rlsolhom mit einem Signal RLHOMGR verknüpft wird und das Ergebnis mit einem Signal rl_w verglichen wird. Ist die genannte Kleiner-Bedingung erfüllt, so wird als Signal eine 1 erzeugt, ansonsten wird eine 0 erzeugt. Zur Erzeugung dieses, die bestimmten Betriebsbedingungen kennzeichnenden Signals sind in der Figur 1 ein Verknüpfungs-Gatter 15 und ein Kleiner-als-Gatter 16 vorgesehen.

Die Verknüpfung des die bestimmten Betriebsbedingungen kennzeichnenden Signals mit B_schhom erfolgt in der Figur 1 mit Hilfe eines Inverters 17, eines Und-Gatters 18 und eines Flip-Flops 19. Das Ausgangssignal dieser Anordnung ist das Signal B_schicht.

Wird B_schhom = 1, wird also die Ausnahme-Betriebsart, der Homogenbetrieb angefordert, so wird der S-Eingang des Flip-Flops 19 zurückgesetzt. Der R-Eingang wird aber erst gesetzt, wenn zusätzlich die bestimmten Betriebsbedingungen erfüllt sind, also wenn die Luftfüllung unter den vorgegebenen Wert gesunken ist. Erst dann wird B_schicht = 0 gesetzt, also tatsächlich in den Homogenbetrieb umgeschaltet.

Dies ist in der Figur 2 dargestellt. Dort geht B_schhom im Zeitpunkt t1 von 0 nach 1 über. Es wird also im Zeitpunkt t1 der Homogenbetrieb angefordert. Der tatsächliche Übergang erfolgt aber nicht sofort, sondern erst nach einer Zeitdauer T1 und damit erst im Zeitpunkt t2. Die Zeitdauer T1 ist dabei abhängig von dem Erreichen der bestimmten Betriebsbedingungen, also gemäß der Figur 1 nach Unterschreiten der vorgegebenen Luftfüllung. Die Ausnahme-Betriebsart wird also erst dann tatsäschlich ausgeführt, wenn die Brennkraftmaschine bestimmte Betriebsbedingungen erfüllt.

Wird danach B_schhom = 0, wird also der Homogenbetrieb nicht mehr angefordert, dann wird entsprechend der Figur 1 sofort das Flip-Flop 19 wieder umgeschaltet und damit B_schicht = 1 gesetzt. Es wird also sofort wieder in den Schichtbetrieb zurückgeschaltet.

Es ist möglich, dass auch bei diesem Zurückschalten in den Schichtbetrieb eine Zeitverzögerung eingebaut ist, die insbesondere von der Erfüllung vorgegebener Betriebsbedingungen abhängig ist. Dies ist in der Figur 1 nicht dargestellt, geht jedoch aus der Figur 2 hervor. Dort ist eine Zeitverzögerung T2 zwischen dem Übergang von B schhom von 1 nach 0 und dem tatsächlichen Umschalten von B schicht von 0 nach 1 beispielhaft vorgesehen.

Wie bereits erwähnt, wird B_schicht dazu verwendet, die beiden Freigabesignale B_homfreigabe und B_schfreigabe zu steuern. Dies wird mit Hilfe der Anordnung 20 in der Figur 1 erreicht. Die Anordnung 20 weist dazu zwei Zeitverzögerungseinheiten 21, 22 und zwei Flop-Flops 23, 24 auf. Das Ausgangssignal des Flip-Flops 23 ist das Signal B_schfreigabe und das Ausgangssignal des Flip-Flops 24 ist das Signal B_homfreigabe.

Geht B_schicht von 1 nach 0 über, geht also die Brennkraftmaschine vom Schichtbetrieb in den Homogenbetrieb über, so wird der R-Eingang des FlipFlps 24 zurückgesetzt. Des weiteren wird die Zeitverzögerungseinheit 21 gestartet, so dass nach Ablauf einer ersten vorgebaren Zeitdauer der S-Eingang des Flip-Flops 23 gesetzt wird. Dadurch wird B_schfreigabe = 1, was bedeutet, dass die Freigabe vorliegt für ein Zurückschalten der Brennkraftmaschine von dem Homogenbetrieb in den Schichtbetrieb. Die erste Zeitdauer stellt also die Zeitverzögerung dar, die die Brennkraftmaschine mindestens in dem Homogenbetrieb verbleiben muß, bevor sie wieder in den Schichtbetrieb zurückgeschaltet werden kann. Diese erste Zeitdauer ist in der Figur 2 beispielhaft als T3 eingetragen. Die Ausführun der Ausnahme-Betriebsart kann also erst dann wieder beende werden, wenn seit der letzten Ausführung der Normal-Betriebsart die vorgebbare Zeitdauer T3 vergangen ist.

Geht B_schicht dann wieder von 0 nach 1 über, wird also die Ausnahmebetriebsart wieder verlassen, so wird der R-Eingang des Flip-Flops 23 zurückgesetzt. Des weiteren wird die Zeitverzögerungseinheit 22 gestartet, so dass nach Ablauf einer zweiten Zeitdauer der S-Eingang des Flip-Flops 24 gesetzt wird. Dadurch wird B_homfreigabe = 1, was bedeutet, dass die Freigabe vorliegt für ein erneutes Umschalten in den Homogenbetrieb. Die zweite Zeitdauer stellt also die Zeitverzögerung dar, die die Brennkraftmaschine mindestens in dem Schichtbetrieb verbleiben muß, bevor sie wieder in den Homogenbetrieb umgeschaltet werden kann. Diese zweite Zeitdauer ist in der Figur 2 beispielhaft als T4 eingetragen. Die Ausnahme-Betriebsart kann also erst dann wieder ausgeführt werden, wenn seit der letzten Ausführung der Ausnahme-Betriebsart die vorgegebbare Zeitdauer T4 vergangen ist.

Die erste und die zweite Zeitdauer können, müssen aber nicht gleich groß sein. Die beiden Zeidauern können über Minimalwerte THOMMIN und/oder TSCHMIN beeinflußt werden. Des weiteren ist es möglich, die beiden Zeitverzögerungseinheiten 21, 22 während des Starts der Brennkraftmaschine ebenfalls abweichend zu betreiben. Insbesondere kann mittels des Signals B_start vorgesehen sein, dass während des Starts der Brennkraftmaschine beide Freigabesignale B_schfreigabe und B_homfreigabe immer gleich 1 sind.

Des Weiteren ist es möglich, dass Freigabebits bestimmter Funktionen abgefragt werden, bevor in eine andere Betriebsart umgeschaltet wird. Bei derartigen Funktionen kann es sich beispielsweise um die Tankentlüftung und/oder die Abgasrückführung handeln. Die Freigabebits können beispielsweise ein Umschalten sperren, wenn vor dem Umschalten noch auf das Schließen eines Ventils, beispielsweise des Tankentlüftungsventils und/oder des Abgasrückführungsventils gewartet werden muss. Ein derartiges Schließen eines Ventils vor einem Umschalten kann erforderlich sein, um ein Ruckeln bei der Umschaltung zu vermeiden.

## Patentansprüche

1. Verfahren zum Betreiben einer Brennkraftmaschine insbesondere eines Kraftfahrzeugs, bei dem Kraftstoff in einer ersten Betriebsart während einer Verdichtungsphase oder in einer zweiten Betriebsart während einer Ansaugphase direkt in einen Brennraum eingespritzt wird, und bei dem die in den Brennraum eingespritzte Kraftstoffmenge in den beiden Betriebsarten unterschiedlich gesteuert und/oder geregelt wird, **dadurch gekennzeichnet, dass** die erste Betriebsart als Normal-Betriebsart und die zweite Betriebsart als Ausnahme-Betriebsart ausgeführt wird, dass die Ausnahme-Betriebsart auf Grund des Betriebszustands der Brennkraftmaschine angefordert wird (B-anfhom = 1), dass die Normal-Betriebsart immer dann ausgeführt wird, wenn keine Anforderung der Ausnahme-Betriebsart vorliegt (B-anfhom = 0), und dass die Ausnahme-Betriebsart erst dann ausgeführt wird, wenn seit der letzten Ausführung der Ausnahme-Betriebsart eine vorgegebene Zeitdauer (T4) vergangen ist.

2. Verfahren nach Anspruch 1, **dadurch gekennzeichnet, dass** eine Ausführung der Ausnahme-Betriebsart erst dann beendet wird, wenn seit der letzten Ausführung der Normal-Betriebsart eine vorgegebene Zeitdauer (T3) vergangen ist.

3. Verfahren nach Anspruch 1 oder 2, **dadurch gekennzeichnet, dass** die Ausnahme-Betriebsart erst ausgeführt wird, wenn die Brennkraftmaschine bestimmte Betriebsbedingungen erfüllt (17, 18, 19).

4. Verfahren nach Anspruch 3, **dadurch gekennzeichnet, dass** die Ausnahme-Betriebsart erst dann ausgeführt wird, wenn eine vorgegebene Luftmenge in dem Brennraum unterschritten ist (15, 16).

5. Brennkraftmaschine insbesondere für ein Kraftfahrzeug, mit einem Einspritzventil, mit dem Kraftstoff in einer ersten Betriebsart während einer Verdichtungsphase oder in einer zweiten Betriebsart während einer Ansaugphase direkt in einen Brennraum einspritzbar ist, und mit einem Steuergerät zur unterschiedlichen Steuerung und/oder Regelung der in den Brennraum eingespritzten Kraftstoffmenge in den beiden Betriebsarten, **dadurch gekennzeichnet, dass** das Steuergerät derart ausgestaltet ist, dass die erste Betriebsart als Normal-Betriebsart und die zweite Betriebsart als Ausnahme-Betriebsart ausführbar ist, dass die Ausnahme-Betriebsart auf Grund des Betriebszustands der Brennkraftmaschine anforderbar ist (B-_anfhom = 1), dass die Normal-Betriebsart immer dann ausführbar ist, wenn keine Anforderung der Ausnahme-Betriebsart vorliegt (B_anfhom = 0), und dass in dem Steuergerät mindestens ein Signal (B_homfreigabe, B_schfreigabe) vorhanden ist, das eine zeitabhängige Freigabe für eine Umschaltung in die Ausnahme-Betriebsart und/oder wieder zurück darstellt.

6. Brennkraftmaschine nach Anspruch 5, **dadurch gekennzeichnet, dass** in dem Steuergerät ein Signal (B-schhom) vorhanden ist, das eine Anforderung der Ausnahme-Betriebsart darstellt.

7. Brennkraftmaschine nach einem der Ansprüche 5 bis 7, **dadurch gekennzeichnet, dass** in dem Steuergerät ein Signal (B_schicht) vorhanden ist, das den Zustand der Normal-Betriebsart kennzeichnet.

8. Brennkraftmaschine nach einem der Ansprüche 5 bis 7, **dadurch gekennzeichnet, dass** in dem Steuergerät mindestens ein Signal vorhanden ist, das eine von anderen Funktionen abhängige Umschaltung in die Ausnahme-Betriebsart und/oder wieder zurück darstellt.

9. Brennkraftmaschine nach Anspruch 8, **dadurch gekennzeichnet, dass** die Umschaltung in Abhängigkeit von der Tankentlüftung und/oder der Abgasrückführung erfolgt.

## Claims

1. Method for operating an internal combustion engine, in particular of a motor vehicle, in which fuel is injected directly into a combustion space during a compression phase in a first operating mode or during an intake phase in a second operating mode, and in which the fuel quantity injected into the combustion space is controlled and/or regulated differently in the two operating modes, **characterized in that** the first operating mode is embodied as a normal operating mode and the second operating mode is embodied as an exceptional operating mode, **in that** the exceptional operating mode is requested on the basis of the operating state of the internal combustion engine (B-anfhom = 1), **in that** the normal operating mode is carried out whenever there is no request for the exceptional operating mode (B-anfhom = 0), and **in that** the exceptional operating mode is not carried out until a predefined time period (T4) has passed since the exceptional operating mode was last carried out.

2. Method according to Claim 1, **characterized in that** the exceptional operating mode is not terminated until a predefined time period (T3) has passed since the normal operating mode was last carried out.

3. Method according to Claim 1 or 2, **characterized in that** the exceptional operating mode is not carried out until the internal combustion engine fulfils specific operating conditions (17, 18, 19).

4. Method according to Claim 3, **characterized in that** the exceptional operating mode is not carried out until the air quantity in the combustion space drops below a predefined value (15, 16).

5. Internal combustion engine, in particular for a motor vehicle, having an injection valve with which fuel can be injected directly into a combustion space during a compression phase in a first operating mode or during an intake phase in a second operating mode, and having a control unit for controlling and/or regulating the fuel quantity injected into the combustion space differently in the two operating modes, **characterized in that** the control unit is configured in such a way that the first operating mode can be carried out as a normal operating mode, and the second operating mode can be carried out as an exceptional operating mode, **in that** the exceptional operating mode can be requested on the basis of the operating state of the internal combustion engine (B_anfhom = = 1), **in that** the normal operating mode can be carried out whenever there is no request for the exceptional operating mode (B_anfhom = 0), and **in that** at least one signal (B_homfreigabe, B_schfreigabe), which constitutes a time-dependent release for switching over into the exceptional operating mode and/or back again, is present in the control unit.

6. Internal combustion engine according to Claim 5, **characterized in that** a signal (B_schhom) which constitutes a request for the exceptional operating mode is present in the control unit.

7. Internal combustion engine according to one of Claims 5 to 7, **characterized in that** a signal (B_schicht) which characterizes the state of the normal operating mode is present in the control unit.

8. Internal combustion engine according to one of Claims 5 to 7, **characterized in that** at least one signal which represents switching over into the exceptional operating mode and/or back again in dependence on other functions is present in the control unit.

9. Internal combustion engine according to Claim 8, **characterized in that** the switching over takes place as a function of the tank venting and/or the exhaust gas feedback.

## Revendications

1. Procédé de mise en oeuvre d'un moteur à combustion interne, notamment d'un véhicule automobile selon lequel le carburant est injecté dans une chambre de combustion selon un premier mode de fonctionnement, pendant la phase de compression ou selon un second mode de fonctionnement pendant la phase d'aspiration, directement dans la chambre de combustion et selon lequel la quantité de carburant injectée dans la chambre de combustion est commandée et/ou régulée différemment dans les deux modes de fonctionnement.
**caractérisé en ce que**
le premier mode de fonctionnement est le mode de fonctionnement normal et le second mode de fonctionnement est le mode de fonctionnement exceptionnel,
le mode de fonctionnement exceptionnel est demandé par l'état de fonctionnement du moteur à combustion interne (B__{req.hom} = 1).
le mode de fonctionnement normal est toujours exécuté s'il n'y a pas de demande du mode de fonctionnement exceptionnel (B__{req.hom} = 0) et
le mode de fonctionnement exceptionnel n'est exécuté que si depuis la dernière exécution du mode de fonctionnement exceptionnel il s'est écoulé une durée prédéterminée (T4).

2. Procédé selon la revendication 1,
**caractérisé en ce que**
l'exécution du mode de fonctionnement exceptionnel ne se termine que si depuis la dernière exécution du mode de fonctionnement normal il s'est écoulé une durée prédéterminée (T3).

3. Procédé selon l'une quelconque des revendications 1 ou 2,
**caractérisé en ce que**
le mode de fonctionnement exceptionnel n'est exécute que si le moteur à combustion interne remplit certaines conditions de fonctionnement (17, 18, 19).

4. Procédé selon la revendication 3,
**caractérisé en ce que**
le mode de fonctionnement exceptionnel n'est exécuté que si la quantité d'air prédéterminée dans la chambre de combustion est dépassée vers le bas (15, 16).

5. Moteur à combustion interne, notamment pour un véhicule automobile, comportant un injecteur qui injecte directement du carburant dans une chambre de combustion selon un premier mode de fonctionnement pendant la phase de compression ou selon un second mode de fonctionnement pendant la phase d'aspiration, et un appareil de commande pour commander différemment et/ou réguler la quantité de carburant Injectée dans la chambre de combustion par les deux modes de fonctionnement.
**caractérisé en ce que**
l'appareil de commande est réalisé pour exécuter le premier mode de fonctionnement comme mode de fonctionnement normal, et le second mode de fonctionnement comme mode de fonctionnement exceptionnel,
le mode de fonctionnement exceptionnel est demandé par l'état de fonctionnement du moteur à combustion interné (B__{req.hom} = 1),
le mode de fonctionnement normal est toujours exécuté lorsqu'il n'y a pas de demande de mode de fonctionnement exceptionnel (B__{req.hom} = 0) et
dans l'appareil de commande il y a au moins un signal (B__{homlib}, B__{stratlib}) qui représente une libération en fonction du temps d'une commutation dans le mode de fonctionnement exceptionnel et/ou une commutation en retour.

6. Moteur à combustion interne selon la revendication 5,
**caractérisé en ce que**
dans l'appareil de commande il y a un signal (B_ₛₜᵣₐₜₕₒₘ) qui représente une demande de mode de fonctionnement exceptionnel.

7. Moteur à combustion interne selon l'une quelconque des revendications 5 à 7,
**caractérise en ce que**
l'appareil de commande comporte un signal (B_{_strat}) qui **caractérise** l'état du mode de fonctionnement normal.

8. Moteur à combustion interne selon l'une quelconque des revendications 5 à 7,
**caractérisé en ce que**
l'appareil de commande comporte au moins un signal qui représente une commutation dépendant des autres fonctions dans le mode de fonctionnel exceptionnel et/ou la commutation en retour.

9. Moteur à combustion interne selon la revendication 8,
**caractérise en ce que**
la commutation se fait en fonction de la ventilation du réservoir et/ou de la réinjection des gaz d'échappement.
